# EUROPEAN PATENT APPLICATION

(11) **EP 4 593 172 A1**
(43) Date of publication of application: **30.07.2025**
(21) Application number: 24217629.5
(22) Date of filing: 05.12.2024
(51) Int. Cl.: H01M 50/15, H01M 50/16, H01M 10/04

(54) **SECONDARY BATTERY**

(30) Priority: 29.01.2024 KR 20240012970
(71) Applicant: SAMSUNG SDI CO., LTD., Yongin-si, Gyeonggi-do 17084 (KR)
(72) Inventor: Kang, Bong Geun, 17084 Yongin-si, Gyeonggi-do (KR); Choi, Woo Hyuk, 17084 Yongin-si, Gyeonggi-do (KR); Yang, Jun Ho, 17084 Yongin-si, Gyeonggi-do (KR); Kwon, Jun Hwan, 17084 Yongin-si, Gyeonggi-do, (KR); Park, Hyun Suk, 17084 Yongin-si, Gyeonggi-do (KR); Lim, Seung Man, 17084 Yongin-si, Gyeonggi-do (KR); Lee, Ju Hyung, 17084 Yongin-si, Gyeonggi-do (KR); Kim, Young Ho, 17084 Yongin-si, Gyeonggi-do (KR)
(74) Representative: Gulde & Partner

(57) **Abstract**

One embodiment of the present disclosure relates to a secondary battery including a cylindrical can including a circular bottom part, and a side part extending from the bottom part, the side part having an open end portion, an electrode assembly accommodated in the cylindrical can, a current interrupt device disposed in the open end portion of the side part and having a vent therein, and a gasket disposed between the side part and the current interrupt device and including a protrusion configured to support a lower part of the current interrupt device.

According to the embodiment of the present disclosure, by improving the shape of the gasket, components such as a cap-up and a safety vent are not deformed by pressure when a crimping part and a beading part are formed on the can for assembly of the cap assembly. Thus, the stability of the secondary battery can be improved.

## Description

### FIELD

Anembodiment of the present disclosure relates to a secondary battery with an improved cap assembly structure.

### BACKGROUND

In general, a cylindrical secondary battery includes a cylindrical electrode assembly, a cylindrical can configured to accommodate the electrode assembly and an electrolyte, and a cap assembly coupled to an upper opening of the can to seal the can and to allow current generated in the electrode assembly to flow to an external device.

A crimping part is formed on an upper part of the can, the cap assembly is seated on the crimping part, and a beading part is formed to fix the cap assembly, thereby fixing the cap assembly to the can. Thus, the cap assembly includes a gasket for insulation from the can. However, a pressure applied to the cap assembly during the formation of the beading part may cause a cap-up to be compressed and deformed, resulting in deformation of the cap-up and a safety vent.

The above-described information disclosed in the technology that serves as the background of the present disclosure is only for improving understanding of the background of the present disclosure and thus may include information that does not constitute the related art.

### SUMMARY

The present disclosure is directed to providing a secondary battery with an improved cap assembly structure, which prevents deformation of components during assembly of the cap assembly.

A secondary battery according to an embodiment of the present disclosure includes a cylindrical can including a circular bottom part and a side part extending from the circular bottom part, the side part having an open end portion, an electrode assembly accommodated in the cylindrical can, a current interrupt device disposed in the open end portion of the side part and having a vent therein, and a gasket disposed between the side part and the current interrupt device and including a protrusion configured to support a lower part of the current interrupt device.

The gasket may include an insulating material.

A cross-sectional shape of the protrusion may be any one of a triangular shape, a streamlined shape, a semicircular shape, a semi-elliptical shape, and a polygonal shape.

A highest point of the protrusion may be in contact with a preset point of the current interrupt device.

The side part may include a beading part adjacent to one end thereof and shaped concavely inward and a crimping part comprising an end portion of the side part that is bent inward.

An upper part of the gasket may be disposed between the crimping part and the current interrupt device, and a lower part of the gasket may be disposed between the current interrupt device and the beading part.

The highest point of the protrusion may be disposed closer to a center of the cylindrical can than is an end portion of the crimping part in a diameter direction of the cylindrical can.

When a cross section of the protrusion has a triangular shape, an angle of the protrusion with respect to a lower surface may range from 7° to 14°.

Further, a secondary battery according to an embodiment of the present disclosure includes a cylindrical can including a circular bottom part, a side part extending from the bottom part, a beading part concavely shaped at one end of the side part, and a crimping part comprising an end portion of the side part that is bent, an electrode assembly accommodated in the cylindrical can, a cap assembly configured to seal the cylindrical can and including a gasket for insulation from the cylindrical can, and a current interrupt device, wherein the gasket includes a ring-shaped body, a connection part extending from the ring-shaped body, an extension part extending downward from the connection part, and a protrusion protruding upward from the connection part to support a lower part of the current interrupt device.

The gasket may include an insulating material.

A cross-sectional shape of the protrusion may be any one of a triangular shape, a streamlined shape, a semicircular shape, a semi-elliptical shape, and a polygonal shape.

The gasket may have a shape in which a thickness of the ring-shaped body decreases toward an end portion thereof.

The connection part of the gasket is bent and may extend from the ring-shaped body at a predetermined angle, and the protrusion may protrude from an upper surface of the connection part.

An upper part of the gasket may be disposed between the crimping part and the current interrupt device, and a lower part of the gasket may be disposed between the current interrupt device and the beading part.

The highest point of the protrusion may be disposed closer to a center of the cylindrical can than an end portion of the crimping part in a diameter direction of the cylindrical can.

When the protrusion includes a first inclined surface protruding upward and a second inclined surface extending downward to be inclined from the first inclined surface, and the protrusion has a triangular cross-section, an angle between the first inclined surface and a lower surface of the connection part may range from 7° to 14°.

Further, a method of manufacturing a secondary battery according to an embodiment of the present disclosure includes forming a cylindrical can including a circular bottom part, a side part extending from the circular bottom part, a beading part, and a crimping part, wherein the beading part is formed concavely at one end of the side part and the crimping part is formed by bending an end portion of the side part, accommodating an electrode assembly in the cylindrical can, accommodating a current interrupt device in the cylindrical can, and sealing the cylindrical can with a cap assembly including a gasket that insulates from the cylindrical can, wherein the gasket includes a ring-shaped body, a connection part extending from the ring-shaped body, an extension part extending downward from the connection part, and a protrusion protruding upward from the connection part, and the method further includes supporting a lower part of the current interrupt device with the protrusion.

The method may further include forming the gasket in a shape in which a thickness of the ring-shaped body decreases toward an end portion thereof.

Forming the gasket may include bending the connection part of the gasket at a predetermined angle to extend from the ring-shaped body, and forming the protrusion to protrude from an upper surface of the connection part.

The method may further include positioning an upper part of the gasket between the crimping part and the current interrupt device, and positioning a lower part of the gasket between the current interrupt device and the beading part.

### BRIEF DESCRIPTION OF DRAWINGS

FIG. 1A is a longitudinal cross-sectional view illustrating a general cylindrical secondary battery.
FIG. 1B is an enlarged cross-sectional view of a portion of a cap assembly according to FIG. 1A.
FIG. 1C is an enlarged cross-sectional view of a portion of a cap assembly according to a modified example of FIG. 1A.
FIG. 2A is a partial cross-sectional view illustrating a direction of pressure applied when assembling the cap assembly according to FIGs. 1A-1C.
FIG. 2B is a partial cross-sectional view illustrating a pressure distribution according to FIG. 2A in detail.
FIG. 3 is a computed tomography (CT) image illustrating a deformation state of the cap assembly after assembling the cap assembly according to FIGs. 1A-1C.
FIG. 4 is a partial cross-sectional view illustrating compression areas for each position of a gasket of the cap assembly according to FIGs. 1A-1C.
FIG. 5 is a partial perspective view for comparing the gasket according to FIGS. 1A to 4 and a gasket according to one embodiment of the present disclosure.
FIGS. 6 and 7 are partial perspective views illustrating the detailed structures of gaskets according to embodiments of the present disclosure
FIG. 8 is a CT image illustrating a state after assembling a cap assembly to which the gasket according to the embodiments of the present disclosure is applied.
FIG. 9 is a longitudinal cross-sectional view illustrating an exemplary cylindrical secondary battery.

### DETAILED DESCRIPTION

Embodiments of the present disclosure are provided to more fully describe the present disclosure to those skilled in the art, the following embodiments may be modified into many different forms, and the scope of the present disclosure is not limited to the following embodiments. Rather, these embodiments are provided so that this disclosure will be thorough and complete and fully convey the spirit of the present disclosure to those skilled in the art.

In addition, in the drawings below, the thickness or size of each layer is exaggerated for convenience and clarity of illustration, and like reference numerals refer to like elements in the drawings. As used in this specification, the term "and/or" may include any and all combinations of one or more of the associated listed items. In addition, in the present specification, it is to be understood that when member A is referred to as being "connected to" member B, the member A may be directly connected to the member B, or member C may be interposed between the members A and B such that the member A is indirectly connected to the member B.

The terms used herein are for the purpose of describing specific embodiments and are not intended to limit the present disclosure. As used in this specification, a singular form may include a plural form unless the context clearly indicates otherwise. In addition, the terms "comprise" or "include" and/or "comprising" or "including," when used in this specification, specify the presence of stated features, numbers, steps, operations, members, elements, and/or groups thereof, but do not preclude the presence or addition of one or more other features, numbers, steps, operations, members, elements, and/or groups thereof.

In the present specification, although the terms "first," "second," and the like may be used to describe various members, components, regions, layers, and/or portions, these members, components, regions, layers, and/or portions are not to be limited by these terms. These terms are used to distinguish one member, component, region, layer, or portion from another member, component, region, layer, or portion. Thus, a first member, component, region, layer, or portion, described below may also refer to a second member, component, region, layer, or portion, without departing from the teachings of the present disclosure.

Spatially relative terms, such as "beneath," "below," "lower," "above," "upper," may be used herein for easy understanding of one element or feature and another element(s) or feature(s) as illustrated in the drawings. These spatially relative terms are intended for ease of comprehension of the present disclosure according to various process states or usage states of the present disclosure and are not intended to limit the present disclosure. For example, when an element or feature in the drawings is turned over, the element or feature described as "beneath" or "below" may be changed to "above" or "upper." Thus, the term "beneath" may encompass the term "above" or "below."

Hereinafter, a general cylindrical secondary battery will be briefly described with reference to the accompanying drawings.

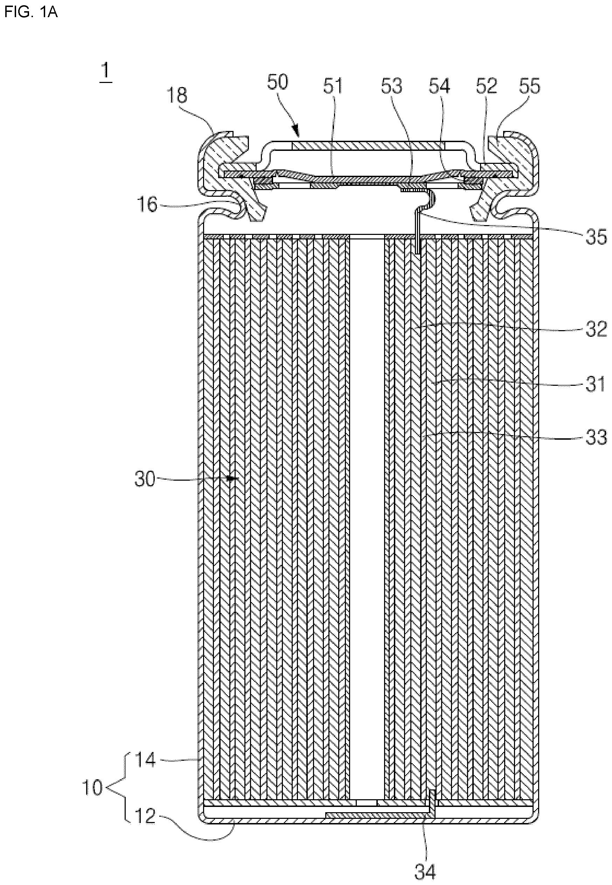

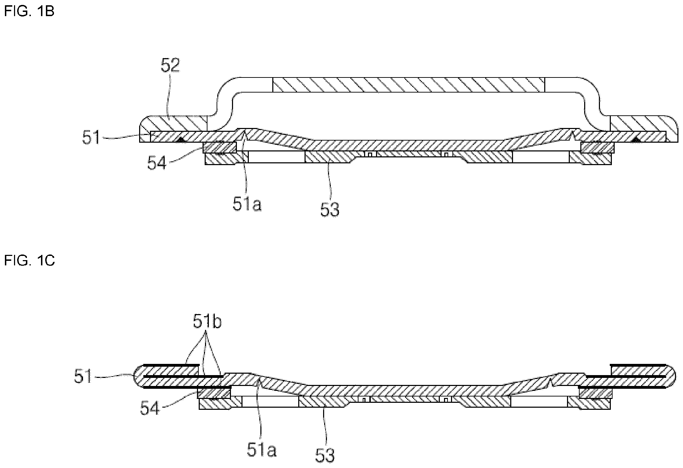

FIG. 1A is a longitudinal cross-sectional view illustrating a general cylindrical secondary battery. FIG. 1B is an enlarged cross-sectional view of a portion of a cap assembly according to FIG. 1A. FIG. 1C is an enlarged cross-sectional view of a portion of a cap assembly according to a modified example of FIG. 1A.

Referring to FIG. 1A, a cylindrical secondary battery 1, which is a general secondary battery, includes a cylindrical can 10 of which one end, in a longitudinal direction, is open, an electrode assembly 30 accommodated in the can 10, and a cap assembly 50 configured to seal the can 10.

The can 10 includes a circular bottom part 12 and a side part 14 extending upward from the bottom part 12, and an upper part of the side part 14 is open. In the process of manufacturing the secondary battery 1, the electrode assembly 30 is accommodated in the can 10 together with an electrolyte through the opening of the can 10. The can 10 may be formed of steel, a steel alloy, nickel-plated steel, a nickel-plated steel alloy, aluminum, an aluminum alloy, or an equivalent thereof.

A beading part 16 and a crimping part 18 are formed on the upper part of the side part 14 to fix the cap assembly 50. The beading part 16 is formed by bending the side part 14 concavely toward the inside of the can 10. The beading part 16 is a part on which the cap assembly 50 is seated when the cap assembly 50 is assembled. The crimping part 18 is formed by bending an end portion of the side part 14 toward the inside of the can 10 after the cap assembly 50 is seated. The crimping part 18 prevents the cap assembly 50 from being separated from the can 10. The beading part 16 is formed to be spaced apart from the electrode assembly 30 so as not to be in contact with the electrode assembly 30.

The electrode assembly 30 includes a negative electrode plate 31 coated with a negative electrode active material (e.g., graphite, carbon, or the like), a positive electrode plate 32 coated with a positive electrode active material (e.g., a transition metal oxide, such as LiCoO₂, LiNiO₂, LiMn₂O₄, or the like), and a separator 33 interposed between the negative electrode plate 31 and the positive electrode plate 32 to prevent a short circuit between the negative electrode plate 31 and the positive electrode plate 32. The negative electrode plate 31 may be copper (Cu) or nickel (Ni) foil, the positive electrode plate 32 may be aluminum (Al) foil, and the separator 33 may be polyethylene (PE) or polypropylene (PP). A negative electrode tab 34 protruding a certain length downward is welded to the negative electrode plate 31, and a positive electrode tab 35 protruding a certain length upward is welded to the positive electrode plate 32. The negative electrode tab 34 is welded to the bottom part 12 of the can 10, and the positive electrode tab 35 is welded to the cap assembly 50. Accordingly, the can 10 operates as a negative electrode, and the cap assembly 50 operates as a positive electrode. The negative electrode plate 31, the positive electrode plate 32, and the separator 33 are wound in a cylindrical shape and accommodated inside the can 10.

Referring to FIGS. 1A and 1B, the cap assembly 50 includes a current interrupt device (CID) 51, a cap-up 52 disposed above the CID 51, and a cap-down 53 disposed below the CID 51. The cap assembly 50 further includes an insulating member 54 inserted between the CID 51 and the cap-down 53 and configured to insulate to prevent a part of the CID 51 other than a central part thereof from coming into contact with the cap-down 53 and an insulating gasket 55 configured to insulate between the cap assembly 50 and the can 10. A part of the CID 51 at the center of the can 10 is in contact with the cap-down 53, and a part thereof supported by the insulating member 54 is spaced apart from the cap-down 53. In the CID 51, a notch 51a that fractures when an internal pressure rises above a certain pressure and discharges gas is formed.

Meanwhile, the cap assembly may have a structure including only the CID 51 without the cap-up. As shown in FIG. 1C, the cap assembly may have a structure in which only the cap-up is excluded from the cap assembly shown in FIGS. 1A and 1B. In this case, an edge of the CID 51 may be folded upward once, and the folded part may be in close contact with an upper surface of the CID 51. An insulating layer 51b may be further provided between the upper surface and the folded part of the CID 51, on an upper surface of the folded part, and between the CID 51 and the insulating member 54.

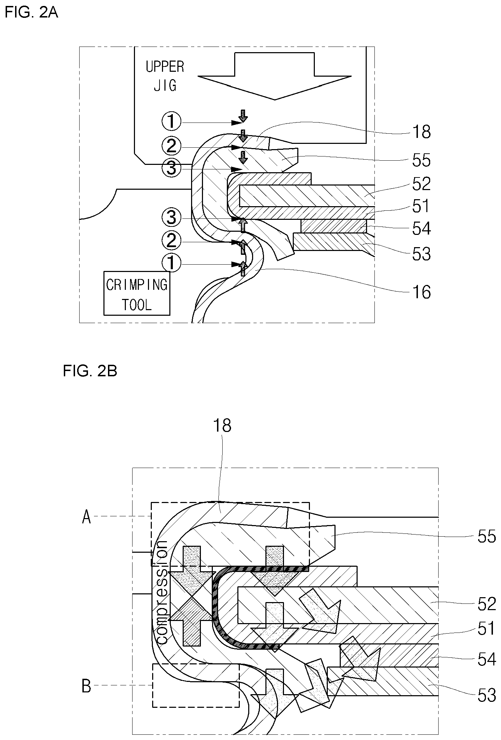

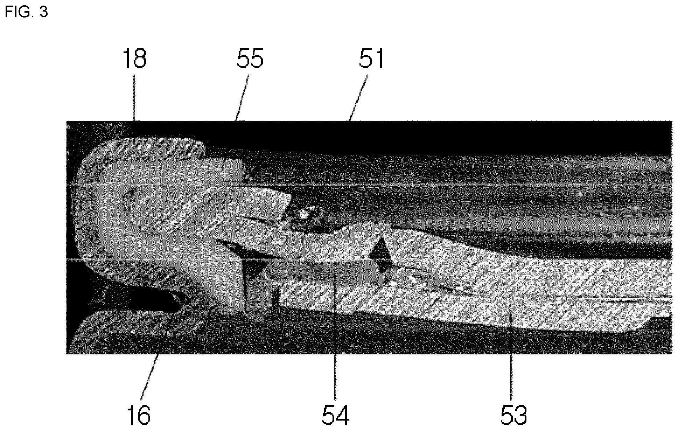

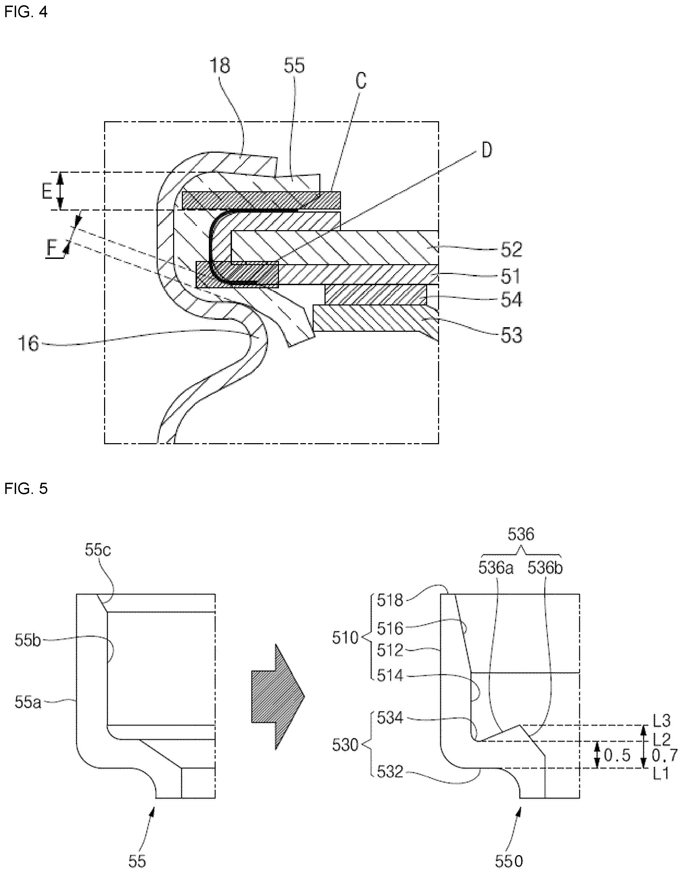

FIG. 2A is a partial cross-sectional view illustrating a direction of pressure applied when assembling the cap assembly according to FIGs. 1A-1B. FIG. 2B is a partial cross-sectional view illustrating a pressure distribution according to FIG. 2A in detail. FIG. 3 is a computed tomography (CT) image illustrating a deformation state of the cap assembly after assembling the cap assembly according to FIGs. 1A-1B. FIG. 4 is a partial cross-sectional view illustrating compression areas for each position of the gasket of the cap assembly according to FIGs. 1A-1B.

Meanwhile, as shown in FIG. 2A, when the side part 14 of the can 10 is pressed with a side jig to form the beading part 16, pressure is applied to the gasket 55 from the beading part 16 in the order of arrows ①, ②, and ③. In addition, when an upper end of the side part 14 is pressed with an upper jig to form the crimping part 18, pressure is applied to the gasket 55 from the crimping part 18 in the order of arrows ①, ②, and ③.

At this time, region A of FIG. 2B is a region in which a load is generated by the pressure applied from above, and region B is a region in which stress is generated by the pressure applied from below. Accordingly, the gasket 55 is compressed due to the pressure applied in a vertical direction. In addition, the pressure transmitted to the gasket 55 not only compresses the gasket 55, but is also transmitted to the cap-down 53 through the CID 51, the cap-up 52, and the insulating member 54 in the direction of the arrows in FIG. 2B. This transmitted force causes the CID 51 and the cap-up 52 to deform in a downward direction.

Referring to FIG. 3, in the CT image of the cap assembly 50, it can be seen that an edge of the cap-up 52 sags downward. That is, the cap-up 52 is deformed in the downward direction.. Due to the deformation of the cap-up 52, the CID 51 also receives a load and is deformed in the downward direction (for convenience, in FIG. 3, a secondary battery having a structure without a cap-up is illustrated, but it should be noted that the deformation of the CID is equally applied to a secondary battery with a cap-up)

Referring to FIG. 4, when region E, which is an upper region of the gasket 55, is compressed 7% compared to its pre-deformation state, region F, which is a lower region of the gasket 55, is compressed 54% compared to its pre-deformation state. That is, region F, which is the lower region, may receive a relatively large amount of pressure.

When the cap assembly 50 is deformed as described above, the stability and reliability of the secondary battery 1 may deteriorate. Accordingly, in order to solve such a problem, in the present embodiment, a gasket 500 having a new structure that can reduce the deformation of the CID 51 is proposed (in the following description, for convenience, a detailed description of the same configuration as in FIGS. 1A to 4 will be omitted).

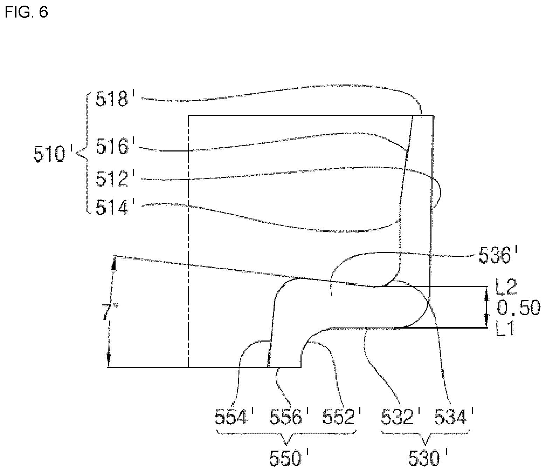

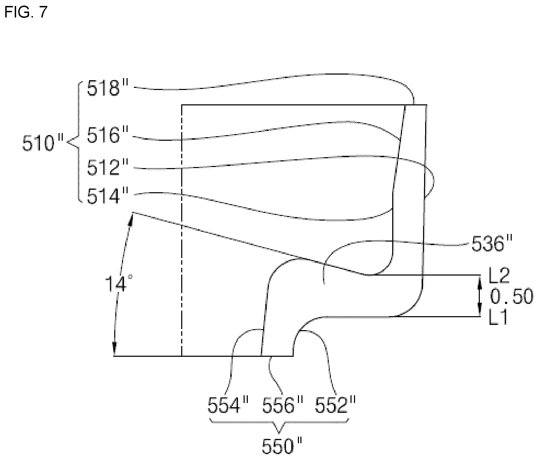

FIG. 5 is a partial perspective view for comparing the gasket according to FIGS. 1A to 4 and the gasket according to one embodiment of the present disclosure. FIGS. 6 and 7 are partial perspective views illustrating the detailed structures of gaskets according to embodiments of the present disclosure (the remaining components except for the gasket are marked with (`) in the reference numerals to distinguish them from the components in FIGS. 1A to 4.

Referring to FIGS. 1A-1C and 5, the gasket 55 described above has a substantially ring shape to surround and support edges of the CID 51 and the cap-up 52. The gasket 55 has an outer circumferential surface 55a and an inner circumferential surface 55b, and an upper surface of the inner circumferential surface 55b is partially chamfered to have a short inclined surface 55c. On the other hand, the gasket 500 according to one embodiment of the present disclosure has a shape chamfered to have an upper inclined surface 516 that is long compared to the short inclined surface 55c formed on the inner circumferential surface 55b of the gasket 55. In addition, the gasket 500 has a structure in which a lower region in which the CID 51 is seated protrudes upward to have an inclination of a certain angle.

Referring to FIG. 5, the gasket 500 according to the present embodiment has a substantially ring shape and includes a body 510 having a predetermined length in the vertical direction, a connection part 530 that is bent substantially vertically from the body 510, and an extension part 550 that extends substantially vertically downward from the connection part 530. The expression "substantially vertical" means that angles between the body 510 and the connection part 530 and between the connection part 530 and the extension part 550 are vertical or close to vertical, but the present disclosure is not limited to such angles. A protrusion 536 on which an CID 51' is seated is formed at an upper part between the connection part 530 and the extension part 550.

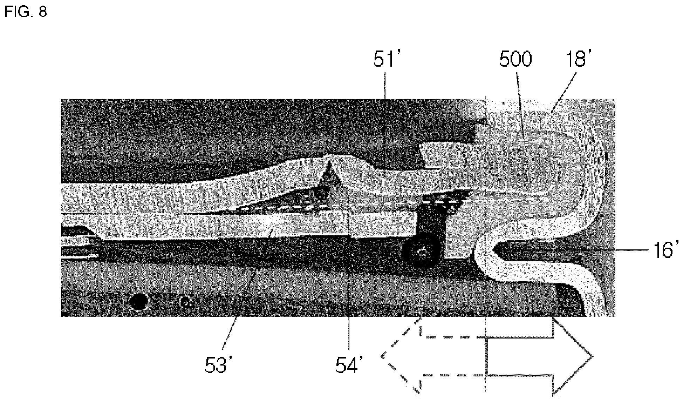

The body 510 may include an outer circumferential surface 512 that is flat in the vertical direction, an inner circumferential surface 514, the upper inclined surface 516 inside the outer circumferential surface 512, and an upper surface 518 connecting the outer circumferential surface 512 to the upper inclined surface 516. The outer circumferential surface 512 is a surface in contact with the side part 14 of the can 10, similar to the gasket 55 shown in FIGs. 1A-1C. The inner circumferential surface 514 is a part in close contact with edges of a CID (see, 51' in FIG. 8 ). The inner circumferential surface 514 refers to a lower part of the outer circumferential surface 512 that is roughly bisected in the vertical direction. When the gasket 500 is bent, only a portion of an upper side of the inner circumferential surface 514 is bent and comes into contact with an upper part of the CID 51'. The upper inclined surface 516 refers to an upper part of the outer circumferential surface 512 that is roughly bisected in the vertical direction. The upper inclined surface 516 is a surface formed in an inclined shape by chamfering a part that was previously the inner circumferential surface. The upper inclined surface 516 has a shape in which a distance (e.g., a thickness of the body) from the outer circumferential surface 512 decreases toward the upper side. That is, a thickness of the upper part of the gasket 500 in a direction away from the electrode assembly 30 is smaller than a thickness of the lower part of the gasket 500 (e.g., a part in which the connection part and the extension part are located). In addition, the gasket 500 has an upper thickness that decreases toward an upper end thereof.

The connection part 530 is a part of the gasket 500 which is bent substantially vertically from the body 510 so as to have a predetermined length in a horizontal direction. The connection part 530 has an outer surface 532 and an inner surface 534, and a distance between the outer surface 532 and the inner surface 534 (e.g., a thickness of the connection part 530) may be equal or similar to a distance between the outer circumferential surface 512 and the inner circumferential surface 514 of the body 510. A portion of the inner surface 534 protrudes upward to form the protrusion 536.

In the protrusion 536, a portion of the inner surface 534 protrudes to be inclined upward to form a highest point (top dead center). A surface formed to be inclined downward from the highest point is connected to the extension part 550. A surface protruding upward to form the highest point is defined as a first inclined surface 536a, and a surface extending downward from the first inclined surface 536a is defined as a second inclined surface 536b. The protrusion 536 in which the first inclined surface 536a and the second inclined surface 536b are connected to form a triangular cross-section is illustrated in FIG. 5. The highest point of the protrusion 536 is a part that receives the most force caused by stress. By increasing a thickness of the part where stress is applied and protruding a part sagging under stress in a direction opposite to the direction of sagging, the force applied to the CID 51' may be reduced. Thus, the force applied to the cap-up may also be reduced.

A starting point of the first inclined surface 536a described above is a lowest point in the protrusion 536. When a height from the outer surface 532 to the highest point is 0.7 mm, a height difference between the lowest point and the highest point may be 0.2 mm. That is, a height from the outer surface 532 to the lowest point is 0.5 mm (in FIG. 5, a horizontal line extending an outer surface is defined as L1, a line passing through the lowest point parallel to L1 is defined as L2, and a line passing through the highest point parallel to L1 is defined as L3. L1 and L2 are equally applied to FIGS. 6 and 7).

For convenience, the inner surface 534 and the protrusion 536 are described with separate reference numerals. However, since the protrusion 536 is formed by changing the shape of the inner surface 534, the protrusion 536 may be referred to as either an inner surface or a protrusion.

The extension part 550 is a part that is bent substantially vertically at an end portion of the connection part 530 and extends downward to have a predetermined length. The extension part 550 has an outer circumferential surface 552, an inner circumferential surface 554, and a lower surface 558 connecting the outer circumferential surface 552 and the inner circumferential surface 554. The protrusion 536 described above is connected to an upper part of the inner circumferential surface 554.

The body 510, the connection part 530, and the extension part 550 have been separately described above, but this is only for clearly illustrating the structure. The body 510, the connection part 530, and the extension part 550 may be integrally formed, and the gasket 500 has a ring shape connected as a whole.

In the embodiments described above, the protrusion 536 is illustrated as having a triangular cross-section. However, the highest point part of the protrusion 536 may have any one of a streamlined shape, a semicircular shape, a semi-elliptical shape, and a polygonal shape.

In the embodiment illustrated in FIG. 6, the highest point part of the protrusion 536 has a streamlined shape. When the height from the outer surface 532 to the lowest point of the protrusion 536 is 0.5 mm, an angle between the lowest point of the protrusion 536 and the first inclined surface 536a may be 7°. Similarly, since L1 and L2 are parallel to each other, an angle between the lowest point and L2 is also 7°.

In the embodiment illustrated in FIG. 7, the highest point of the protrusion 536 also has a streamlined shape. When the height from the outer surface 532 to the lowest point of the protrusion 536 is 0.5 mm, the angle between the lowest point of the protrusion 536 and the first inclined surface 536a may be 14°. Similarly, since L1 and L2 are parallel to each other, an angle of the lowest point and L2 is also 14°.

The highest point of the protrusion 536 of FIGS. 5 to 7 described above should be located in a recessed deformation section of the gasket 500 after being maximally compressed by crimping.

FIG. 8 is a CT image illustrating a state after assembling a cap assembly to which the gasket according to the embodiments of the present disclosure is applied.

In FIG. 8, the gasket 500 is maximally compressed by crimping and is supported by the beading part 16. At this time, the section indicated by the solid line is a section in which the gasket 500 is supported and is a stress generation section. That is, the section indicated by the solid line is a section in which the gasket 500 is deformed by stress. The section indicated by the dotted line is a section in which the gasket 500 is not supported. This section is a section in which the CID 51' is deformed by being recessed due to sagging of the gasket, rather than stress. This section is conveniently referred to as a recessed deformation section, which may be a preset point of the CID 51'. That is, when the gasket 500 described above with reference to FIGS. 5 to 7 is applied, the part of the protrusion 536 that protrudes upward is located in the recessed deformation section (the highest point of the protrusion is located closer to the center of the can than is the end portion of the crimping part in a diameter direction of the can). Thus, deformation of the CID can be minimized.

Referring to FIG. 8, it can be seen that the CID 51' are not deformed in the downward direction in a CT image of an actual cap assembly 50' to which the gasket 500 of the present embodiment is applied,

As described above, according to the embodiment of the present disclosure, by improving the shape of the gasket, components such as the cap-up and the safety vent will not be deformed by pressure when the crimping part and the beading part are formed on the can for assembly of the cap assembly. Thus, the stability of the secondary battery can be improved.

Meanwhile, the structure of the gasket described above can also be applied to other types of cylindrical secondary batteries.

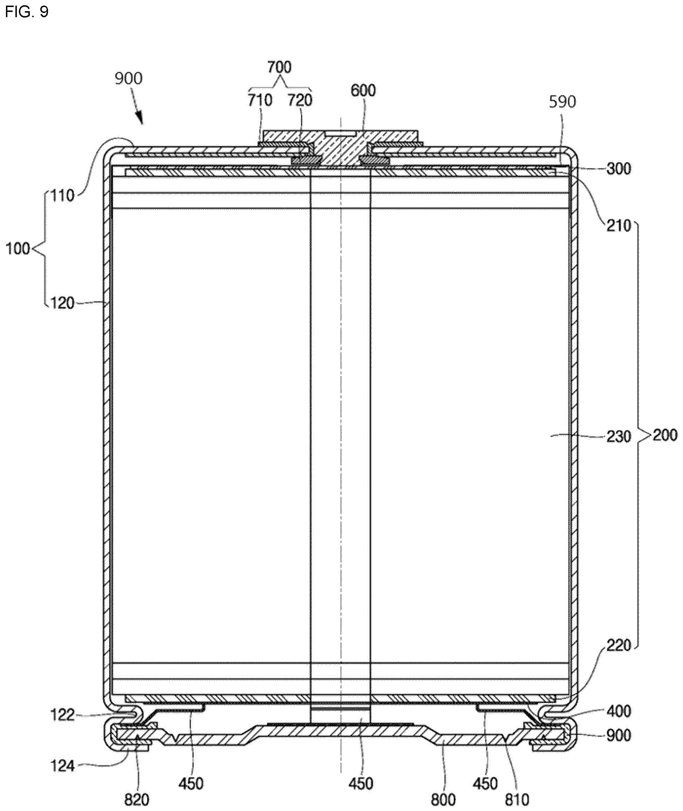

FIG. 9 is a longitudinal cross-sectional view illustrating an exemplary cylindrical secondary battery.

An exemplary secondary battery may include a can 100, an electrode assembly 200, a first current collector plate 300, a second current collector plate 400, a negative electrode lead 450, an insulating member 590a, positive electrode terminal 600, a first gasket 700, a cap plate 800, and a second gasket 900.

The can 100 accommodates the electrode assembly 200 and an electrolyte, and may have a substantially cylindrical shape. The can 100 includes a circular upper surface part 110 and a side part 120 extending downward from the upper surface part 110. The positive electrode terminal 600 and the first gasket 700 may be coupled to the upper surface part 110. A beading part 122 and a crimping part 124 may be formed on a lower part of the side part 120. When assembling the electrode assembly 200 in the can 100, the beading part 122 is formed after the electrode assembly 200 is inserted by disposing the can 100 with the upper surface part 110 facing downward. The separation of the electrode assembly 200 can be prevented by the beading part 122. The beading part 122 may be formed by processing a lower end of the side part 120 to be concave toward the inside of the can 100. After forming the beading part 122, the cap plate 800 and the second gasket 900 are assembled, and the crimping part 124 is formed to prevent the cap plate 800 from being separated. The crimping part 124 may be formed by bending an end portion of the side part 120 toward the inside of the can 100.

The electrode assembly 200 may be disposed such that an uncoated part of a first electrode plate 210 protrudes further upward than an upper end of a second electrode plate 220. In addition, an uncoated part of the second electrode plate 220 is disposed to protrude further downward than a lower end of the first electrode plate 210, and the electrode assembly 200 may be wound in a jelly-roll shape. In this state, the first current collector plate 300 may be welded to the uncoated part of the first electrode plate 210, and the second current collector plate 400 may be welded to the uncoated part of the second electrode plate 220.

The first current collector plate 300 is welded and electrically connected to the first electrode plate 210, which is a positive electrode plate, and thus may be defined as a positive electrode current collector plate. The first current collector plate 300 may have a substantially disk shape. The first current collector plate 300 may be electrically connected to the positive electrode terminal 600 at a central part thereof. A plate-shaped insulating member 590 may be provided between the first current collector plate 300 and the can 100.

The second current collector plate 400 is welded and electrically connected to the second electrode plate 220, which is a negative electrode plate, and thus may be defined as a negative electrode current collector plate. The second current collector plate 400 may have a substantially disk shape. The second current collector plate 400 may be electrically connected to the side part 120 of the can 100 by a plurality of negative electrode leads 450. Since the negative electrode leads 450 are electrically connected to the side part 120, the can 100 becomes a negative electrode. Thus, the positive electrode terminal 600 is installed to be insulated from the can 100.

The positive electrode terminal 600 is installed to be insulated from the upper surface part 110 of the can 100 by the first gasket 700. Illustratively, the positive electrode terminal 600 may be a rivet terminal that is riveted to the upper surface part 110 from the inside or outside of the can 100.

The first gasket 700 insulates between the positive electrode terminal 600 and the can 100. Illustratively, the first gasket 700 may include an upper gasket 710 that insulates between the positive electrode terminal 600 and an outer surface of the upper surface part 110, and a lower gasket 720 that insulates between the positive electrode terminal 600 and an inner surface of the upper surface part 110.

The cap plate 800 may be a substantially disk-shaped plate, and may be coupled to the side part 120 through the second gasket 900. The cap plate 800 may be fixed to the can 100 by the beading part 122 and the crimping part 124. Since the second gasket 900 is disposed between the cap plate 800 and the side part 120, the cap plate 800 is insulated from the can 100. Thus, the cap plate 800 becomes neutral (non-polarized), having neither a negative nor a positive polarity. A notch 810 for discharging gas may be provided in a plate surface of the cap plate 800.

The shapes of the gasket 500, 510', and 510" described above with reference to FIGS. 5 to 7 may be applied to the second gasket 900. That is, the second gasket 900 of FIG. 9 may be replaced with one of the gaskets 500, 510', and 510" of FIGS. 5 to 7.

Accordingly, the cap plate and the notch are not deformed by pressure when the crimping part and the beading part are formed on the can for assembly of the cap plate. Thus, the stability of the secondary battery can be improved.

According to an embodiment of the present disclosure, by improving the shape of a gasket, components such as a cap-up and a safety vent are not deformed by pressure when a crimping part and a beading part are formed on a can for assembly of a cap assembly. Thus, the stability of a secondary battery can be improved.

The above description is only one embodiment for implementing the present disclosure, and the present disclosure is not limited to the above-described embodiment. As claimed in the following claims, the technical spirit of the present disclosure includes the scope in which various changes can be made by anyone skilled in the art without departing from the gist of the present disclosure.

## Claims

1. A secondary battery comprising:
a cylindrical can (10) including a circular bottom part (12) and a side part (14) extending from the circular bottom part, the side part having an open end portion;
an electrode assembly (30) accommodated in the cylindrical can;
a current interrupt device (51) disposed in the open end portion of the side part and having a vent therein; and
a gasket (55) disposed between the side part (14) and the current interrupt device (51) and including a protrusion (536) configured to support a lower part of the current interrupt device.

2. The secondary battery of claim 1, wherein the gasket (55) includes an insulating material.

3. The secondary battery of claim 1 or 2, wherein a cross-sectional shape of the protrusion (536) is any one of a triangular shape, a streamlined shape, a semicircular shape, a semi-elliptical shape, and a polygonal shape.

4. The secondary battery of any of claims 1 to 3, wherein a highest point of the protrusion is in contact with a preset point of the current interrupt device.

5. The secondary battery of any of the preceding claims, wherein the side part includes a beading part (16) adjacent to one end thereof and shaped concavely inward and a crimping part (18) comprising an end portion of the side part that is bent inward.

6. The secondary battery of claim 5, wherein:
an upper part of the gasket (55) is disposed between the crimping part (18) and the current interrupt device (51), and
a lower part of the gasket (55) is disposed between the current interrupt device and the beading part.

7. The secondary battery of claim 5 or 6, wherein the highest point of the protrusion is (536) disposed closer to a center of the cylindrical can than an end portion of the crimping part (18) in a diameter direction of the cylindrical can.

8. The secondary battery of any of the preceding claims, wherein, when a cross section of the protrusion has a triangular shape, an angle of the protrusion (536) with respect to a lower surface ranges from 7° to 14°.

9. The secondary battery of any of the preceding claims,
wherein the gasket (55) includes a ring-shaped body, a connection part (530) extending from the ring-shaped body (510), an extension part (550) extending downward from the connection part, and the protrusion (536) protruding upward from the connection part to support a lower part of the current interrupt device.

10. The secondary battery of claim 9, wherein the gasket has (55) a shape in which a thickness of the ring-shaped body decreases toward an end portion thereof.

11. The secondary battery of claim 9 or 10, wherein:
the connection part (530) of the gasket is bent and extends from the ring-shaped body at a predetermined angle, and
the protrusion (536) protrudes from an upper surface of the connection part.

12. The secondary battery of any of claims 9 to 11, wherein when the protrusion (536) includes a first inclined surface (536a) protruding upward and a second inclined surface (536b) extending downward to be inclined from the first inclined surface, and the protrusion has a triangular cross-section, an angle between the first inclined surface and a lower surface of the connection part ranges from 7° to 14°.

13. A method of manufacturing a secondary battery of any of the preceding claims, the method comprising:
forming a cylindrical can (10) including a circular bottom part, a side part extending from the circular bottom part, a beading part, and a crimping part, wherein the beading part is formed concavely at one end of the side part and the crimping part is formed by bending an end portion of the side part;
accommodating an electrode assembly (30) in the cylindrical can;
accommodating a current interrupt device (51) in the cylindrical can; and
sealing the cylindrical can with a cap assembly (50) including a gasket (55) that insulates from the cylindrical can,
wherein the gasket (55) includes a ring-shaped body (510), a connection part (530) extending from the ring-shaped body, an extension part (550) extending downward from the connection part, and a protrusion (536) protruding upward from the connection part, and
the method further comprises supporting a lower part of the current interrupt device with the protrusion.

14. The method of claim 13, further comprising forming the gasket (55) in a shape in which a thickness of the ring-shaped body decreases toward an end portion thereof, and/or wherein forming the gasket (55) comprises:
bending the connection part of the gasket at a predetermined angle to extend from the ring-shaped body, and
forming the protrusion to protrude from an upper surface of the connection part.

15. The method of claim 13 or 14, further comprising:
positioning an upper part of the gasket (55) between the crimping part (18) and the current interrupt device (51), and
positioning a lower part of the gasket (55) between the current interrupt device and the beading part (16).
